# EUROPEAN PATENT APPLICATION

(11) **EP 4 488 982 A1**
(43) Date of publication of application: **08.01.2025**
(21) Application number: 24197937.6
(22) Date of filing: 02.09.2024
(51) Int. Cl.: G08G 5/00

(54) **ANONYMIZED INDICATION AND/OR IDENTIFICATION OF EXCLUSION ZONES FOR UNCREWED AERIAL VEHICLES OR OTHER FLIGHT VEHICLES**

(30) Priority: 07.07.2023 US 202363581152 P; 01.08.2024 US 202418791606
(71) Applicant: Raytheon Company, Tewksbury, MA 01876 (US)
(72) Inventor: EDRY, Mark J., Arlington, 02476-7236 (US); ROGERS, ChristopherJ., Stow, 01775 (US)
(74) Representative: Dehns

(57) **Abstract**

A method includes obtaining data associated with a specified airspace indicating or identifying manned flights within the specified airspace and identifying one or more exclusion zones associated with one or more manned flights within the specified airspace based on the data. Each exclusion zone identifies a volume from which one or more flight vehicles (116a-116d) are excluded from operating within the specified airspace. The method also includes modifying each exclusion zone in order to randomly change a shape of exclusion zone and generate one or more modified exclusion zones. In addition, the method includes providing information defining the modified exclusion zone(s) to one or more flight vehicle operators (114a-114d) so that the one or more flight vehicle operators are able to avoid operating the flight vehicle(s) in the modified exclusion zone(s). The information defining modified exclusion zone(s) lacks information identifying the manned flights within the exclusion zone(s).

## Description

### TECHNICAL FIELD

This disclosure is generally directed to flight vehicle control systems and other flight systems. More specifically, this disclosure is directed to anonymized indication and/or identification of exclusion zones for uncrewed aerial vehicles (UAVs) or other flight vehicles.

### BACKGROUND

Various types of aircraft can operate within the same general airspace, such as when airplanes, helicopters, air taxis, and drones or other uncrewed aerial vehicles (UAVs) can operate over a city or in some other common airspace. In order to avoid collisions or other safety or security concerns, operators of certain aircraft (such as UAVs) are often excluded from operating their aircraft in specified areas of an airspace, and these specified areas can be referred to as exclusion zones. In many cases, exclusion zones are defined dynamically and can vary over time, such as when exclusion zones are based on the presence or absence of other aircraft within a given airspace.

### SUMMARY

This disclosure relates to anonymized indication and/or identification of exclusion zones for uncrewed aerial vehicles (UAVs) or other flight vehicles.

According to a first aspect of the invention, there is provided, a method which includes obtaining data associated with a specified airspace indicating or identifying manned flights within the specified airspace, and identifying one or more exclusion zones associated with one or more of the manned flights within the specified airspace based on the data, where each exclusion zone identifies a volume from which one or more flight vehicles are excluded from operating within the specified airspace. The method also includes modifying each of the one or more exclusion zones in order to randomly change a shape of each of the one or more exclusion zones and generate one or more modified exclusion zones. In addition, the method includes providing information defining the one or more modified exclusion zones to one or more flight vehicle operators so that the one or more flight vehicle operators are able to avoid operating the one or more flight vehicles in the one or more modified exclusion zones. The information defining the one or more modified exclusion zones lacks information identifying the one or more manned flights within the one or more exclusion zones.

According to a second aspect of the invention, there is provided, an apparatus which includes a communications unit configured to obtain data associated with a specified airspace indicating or identifying manned flights within the specified airspace, and at least one processing device operatively coupled to the communications unit. The at least one processing device is configured to identify one or more exclusion zones associated with one or more of the manned flights within the specified airspace based on the data, where each exclusion zone identifies a volume from which one or more flight vehicles are excluded from operating within the specified airspace. The at least one processing device is also configured to modify each of the one or more exclusion zones in order to randomly change a shape of each of the one or more exclusion zones and generate one or more modified exclusion zones. The communications unit is also configured to provide information defining the one or more modified exclusion zones to one or more flight vehicle operators so that the one or more flight vehicle operators are able to avoid operating the one or more flight vehicles in the one or more modified exclusion zones. The information defining the one or more modified exclusion zones lacks information identifying the one or more manned flights within the one or more exclusion zones.

According to a third aspect of the invention, there is provided a non-transitory machine readable medium containing instructions that when executed cause at least one processor to obtain data associated with a specified airspace indicating or identifying manned flights within the specified airspace, and identify one or more exclusion zones associated with one or more of the manned flights within the specified airspace based on the data, where each exclusion zone identifies a volume from which one or more flight vehicles are excluded from operating within the specified airspace. The non-transitory machine readable medium also contains instructions that when executed cause the at least one processor to modify each of the one or more exclusion zones in order to randomly change a shape of each of the one or more exclusion zones and generate one or more modified exclusion zones. The non-transitory machine readable medium further contains instructions that when executed cause the at least one processor to provide information defining the one or more modified exclusion zones to one or more flight vehicle operators so that the one or more flight vehicle operators are able to avoid operating the one or more flight vehicles in the one or more modified exclusion zones. The information defining the one or more modified exclusion zones lacks information identifying the one or more manned flights within the one or more exclusion zones.

Any single one or any combination of the following features may be used with the examples above. Each of the one or more modified exclusion zones may be modified so as to hide an actual location and an actual flight path of the one or more associated manned flights. The data may include at least one of an aircraft identifier, an aircraft location within the specified airspace, an aircraft ground speed, and an aircraft type. Each of the one or more modified exclusion zones may be generated by (i) randomly modifying a shape of the associated exclusion zone and (ii) randomly modifying upper and lower bounds of the associated exclusion zone. Each of the one or more flight vehicle operators may subscribe to receive at least one modified exclusion zone. Each subscription may last only for an expected time period of an associated flight by a flight vehicle in the specified airspace. The data associated with the specified airspace may be obtained through a one-way data diode.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example system supporting anonymized indication and/or identification of exclusion zones for uncrewed aerial vehicles (UAVs) or other flight vehicles according to this disclosure;
FIGURE 2 illustrates an example device supporting anonymized indication and/or identification of exclusion zones for UAVs or other flight vehicles according to this disclosure;
FIGURE 3 illustrates an overview of an example process supporting anonymized indication and/or identification of exclusion zones for UAVs or other flight vehicles according to this disclosure;
FIGURE 4 illustrates a block diagram for an example system supporting anonymized indication and/or identification of exclusion zones for UAVs or other flight vehicles according to this disclosure;
FIGURE 5 illustrates a block diagram for a software architecture supporting anonymized indication and/or identification of exclusion zones for UAVs or other flight vehicles according to this disclosure;
FIGURE 6 illustrates a block diagram for another example system supporting anonymized indication and/or identification of exclusion zones for UAVs or other flight vehicles according to this disclosure; and
FIGURE 7 illustrates a block diagram for another example system supporting anonymized indication and/or identification of exclusion zones for UAVs or other flight vehicles according to this disclosure.

### DETAILED DESCRIPTION

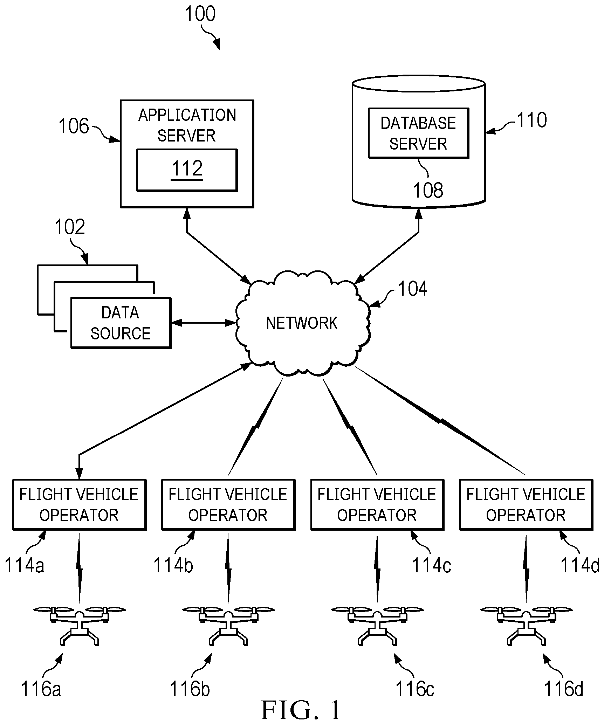

FIGURES 1 through 7, described below, and the various embodiments used to describe the principles of the present invention in this patent document are by way of illustration only and should not be construed in any way to limit the scope of the invention. Those skilled in the art will understand that the principles of the present invention may be implemented in any type of suitably arranged device or system.

As noted above, various types of aircraft can operate within the same general airspace, such as when airplanes, helicopters, air taxis, and drones or other uncrewed aerial vehicles (UAVs) can operate over a city or in some other common airspace. In order to avoid collisions or other safety or security concerns, operators of certain aircraft (such as UAVs) are often excluded from operating their aircraft in specified areas of an airspace, and these specified areas can be referred to as exclusion zones. In many cases, exclusion zones are defined dynamically and can vary over time, such as when exclusion zones are based on the presence or absence of other aircraft within a given airspace.

UAV operators operating beyond a visual line of sight (BVLOS) often depend on their associated industry-deployed Unmanned Traffic Management (UTM) Service Supplier (USS) to provide air situational awareness of other flight vehicles to keep operations safe. However, segregation of UTM and manned traffic cannot be guaranteed, so UAV operators need to have awareness of manned flights in their operating areas. Unfortunately, this awareness is often not fully possible in various situations. As an example, in the United States, the Federal Aviation Administration (FAA) does not publish complete and timely Air Traffic Management (ATM) surveillance tracking data to systems outside of the National Airspace System (NAS). For instance, while the System Wide Information Management (SWIM) network does provide ATM tracking data, the SWIM feed excludes sensitive flights (such as military flights) and some private flights. Also, the SWIM feed is not guaranteed to be timely and does not provide a guaranteed service level. As a result, SWIM is inadequate for air traffic management purposes.

This disclosure provides various techniques for anonymized indication and/or identification of exclusion zones for uncrewed aerial vehicles or other flight vehicles. As described in more detail below, data from one or more data sources can be obtained, such as data related to manned flights or other flights in a given airspace. One or more volumes can be identified, where each volume defines an exclusion zone from which one or more flight vehicles are excluded from operating. Each exclusion zone can be based on one or more of the identified flights. A volume identified by each exclusion zone can be randomized, such as by randomly modifying a polygon or other shape of the exclusion zone and/or by randomly modifying upper and lower bounds of the exclusion zone, which can help to hide an actual location and track of the one or more identified flights associated with the exclusion zone. Information defining the volume identified by each exclusion zone can be provided to one or more flight vehicle operators so that the flight vehicle operators can avoid operating flight vehicles in the exclusion zone. The information defining the volume identified by each exclusion zone can lack any identifying information associated with the one or more identified flights. In this way, the described techniques can be used to define exclusion zones while providing improved security.

FIGURE 1 illustrates an example system 100 supporting anonymized indication and/or identification of exclusion zones for UAVs or other flight vehicles according to this disclosure. As shown in FIGURE 1, the system 100 includes or is used in conjunction with one or more data sources 102, at least one network 104, at least one application server 106, and at least one database server 108 associated with at least one database 110. Each data source 102 represents a source of possible data to be used in identifying exclusion zones within one or more specified airspaces. In some cases, for example, the one or more data sources 102 can represent one or more sources of data identifying manned flights or other flights within the one or more specified airspaces or other data identifying locations where UAVs or other flight vehicles should not operate. As a particular example, the one or more data sources 102 may include one or more air traffic management (ATM) systems that provide information about manned flights within one or more specified airspaces.

The network 104 facilitates communication between various components of the system 100, such as via wired or wireless connections. For example, the network 104 may communicate Internet Protocol (IP) packets, frame relay frames, Asynchronous Transfer Mode (ATM) cells, or other suitable information between network addresses. The network 104 may include one or more local area networks (LANs), metropolitan area networks (MANs), wide area networks (WANs), all or a portion of a global network such as the Internet, or any other communication system or systems at one or more locations. The network 104 may also operate according to any appropriate communication protocol or protocols.

The application server 106 is coupled to the network 104 and is coupled to or otherwise communicates with the database server 108. The application server 106 supports the execution of one or more applications 112, at least one of which is designed to identify exclusion zones based on data from the data source(s) 102 and to randomize the shapes of the exclusion zones. For example, the application 112 may be configured to receive data identify manned flights in one or more specified airspaces and generate initial exclusion zones around the manned flights. The application 112 may also be configured to randomly modify the exclusion zones (such as by randomly expanding their shapes) in order to obscure the true locations and flight paths of the manned flights. The application 112 may further be configured to provide the randomly-modified exclusion zones without any identifying information associated with the manned flights. Note that while the exclusion zones here are described as being defined based on manned flights, the exclusion zones may be initially defined based on any other suitable information.

The database server 108 operates to store and facilitate retrieval of various information used, generated, or collected by the application server 106. For example, the database server 108 may store various information in relational database tables or other data structures in the database 110. In some embodiments, the database 110 can be used to store and facilitate retrieval of information obtained from the data source(s) 102 and information defining the modified exclusion zones generated by the application(s) 112. Note that the database server 108 may also be used within the application server 106 to store information, in which case the application server 106 may store the information itself.

In this example, modified exclusion zones generated by the application(s) 112 can be provided to one or more flight vehicle operators 114a-114d. In some cases, this may involve the distribution of modified exclusion zones directly to the flight vehicle operators 114a-114d. In other cases, this may involve the distribution of modified exclusion zones indirectly to the flight vehicle operators 114a-114d, such as via one or more UTM Service Suppliers (USSs). Each flight vehicle operator 114a-114d can be associated with one or more flight vehicles 116a-116d. In this example, the flight vehicles 116a-116d represent drones, although each flight vehicle operator 114a-114d can be associated with any suitable type(s) of flight vehicle(s). Each flight vehicle operator 114a-114d can use the modified exclusion zones in order to operate flight vehicles 116a-116d outside of the modified exclusion zones. In some cases, each flight vehicle operator 114a-114d can subscribe for receiving one or more modified exclusion zones for each flight controlled by the flight vehicle operator, and the one or more modified exclusion zones can be updated by the application(s) 112 during that flight.

Although FIGURE 1 illustrates one example of a system 100 supporting anonymized indication and/or identification of exclusion zones for UAVs or other flight vehicles, various changes may be made to FIGURE 1. For example, the system 100 may include any suitable number of data sources 102, networks 104, application servers 106, database servers 108, databases 110, applications 112, flight vehicle operators 114a-114d, and flight vehicles 116a-116d. Also, these components may be located in any suitable locations and might be distributed over a large area. Further, the system 100 shown in FIGURE 1 has been simplified for ease of illustration and explanation. The system 100 can include any number of additional components that provide desired functionality in the system 100, such as components used for data security. In addition, while FIGURE 1 illustrates one example operational environment in which anonymized indication and/or identification of exclusion zones for UAVs or other flight vehicles may be used, this functionality may be used in any other suitable system.

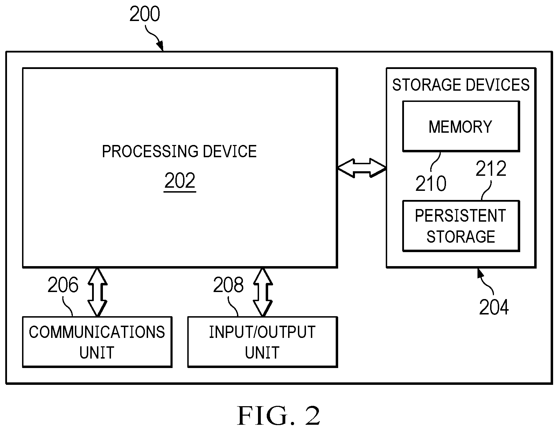

FIGURE 2 illustrates an example device 200 supporting anonymized indication and/or identification of exclusion zones for UAVs or other flight vehicles according to this disclosure. One or more instances of the device 200 may, for example, be used to at least partially implement the functionality of the application server 106, database server 108, or flight vehicle operator 114a-114d in FIGURE 1. However, each of these components may be implemented in any other suitable manner.

As shown in FIGURE 2, the device 200 denotes a computing device or system that includes at least one processing device 202, at least one storage device 204, at least one communications unit 206, and at least one input/output (I/O) unit 208. The processing device 202 may execute instructions that can be loaded into a memory 210. The processing device 202 includes any suitable number(s) and type(s) of processors or other processing devices in any suitable arrangement. Example types of processing devices 202 include one or more microprocessors, microcontrollers, digital signal processors (DSPs), application specific integrated circuits (ASICs), field programmable gate arrays (FPGAs), or discrete circuitry.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random access memory or any other suitable volatile or non-volatile storage device(s). The persistent storage 212 may contain one or more components or devices supporting longer-term storage of data, such as a read only memory, hard drive, Flash memory, or optical disc.

The communications unit 206 supports communications with other systems or devices. For example, the communications unit 206 can include a network interface card or a wireless transceiver facilitating communications over a wired or wireless network. The communications unit 206 may support communications through any suitable physical or wireless communication link(s). As a particular example, the communications unit 206 may support communication over the network(s) 104 of FIGURE 1.

The I/O unit 208 allows for input and output of data. For example, the I/O unit 208 may provide a connection for user input through a keyboard, mouse, keypad, touchscreen, or other suitable input device. The I/O unit 208 may also send output to a display 214 or other suitable output device. Note, however, that the I/O unit 208 may be omitted if the device 200 does not require local I/O, such as when the device 200 represents a server or other device that can be accessed remotely.

In some embodiments, instructions can be executed by the processing device 202 in order to implement the functionality of the one or more applications 112. For example, the processing device 202 may execute instructions that cause the processing device 202 to obtain data retrieved from one or more data sources 102, identify initial exclusion zones, randomly modify the exclusion zones, and provide the modified exclusion zones to one or more flight vehicle operators 114a-114d.

Although FIGURE 2 illustrates one example of a device 200 supporting anonymized indication and/or identification of exclusion zones for UAVs or other flight vehicles, various changes may be made to FIGURE 2. For example, computing and communication devices and systems come in a wide variety of configurations, and FIGURE 2 does not limit this disclosure to any particular computing or communication device or system.

Additional details regarding example architectures that can be implemented in and example operations that can be performed using the system 100 of FIGURE 1 and/or the device 200 of FIGURE 2 (or other systems or devices) are provided below. Note that these details are for illustration and explanation only and that other implementations are possible and within the scope of this disclosure.

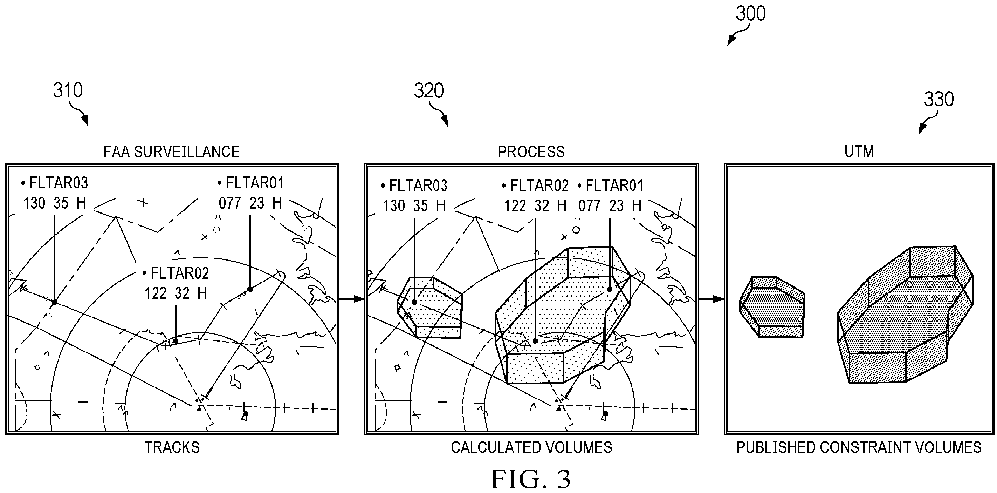

FIGURE 3 illustrates an overview of an example process 300 supporting anonymized indication and/or identification of exclusion zones for UAVs or other flight vehicles according to this disclosure. One aspect of the process 300 includes leveraging Standard Terminal Automation Replacement System (STARS) data or other data (such as manned air traffic information and optionally other available air traffic information including unmanned air traffic) to publish dynamic volumes of active airspace, anonymized and "fuzzed" from its air surveillance picture. The active airspace can include no identifying characteristics of the aircraft using the airspace and can be randomized to an extent to avoid a user's readily deriving a precise aircraft location within a volume. Publishing the resulting dynamic volumes would allow UAV operators to use the dynamic volumes to avoid aircraft to a finer granularity than current procedures while preserving the security of manned aircraft using the airspace.

A panel 310 of the process 300 shows an air situation as maintained by the STARS system. For every aircraft in its airspace, STARS maintains its identifier, its precise three-dimensional location in the airspace, its ground speed, the aircraft type, etc. This information is very sensitive from a security standpoint and may only be shared with certain other systems, such as those authorized by the FAA. This information is typically not available to UAV operators.

During the process 300, the track information is anonymized as shown in a panel 320 and presented to UAV operators as part of uncrewed aircraft system (UAS) traffic management (UTM) solely as abstracted constraint (or restriction) volumes based on the tracks' lateral positions and altitudes as shown in a panel 330. The volumes' contours are such that they define a safe separation from the aircraft with additional capacity to obscure the aircraft's true locations. The volumes can be updated periodically as the air situation evolves, and the volumes can be sized so as to keep the update rate manageable. In some embodiments, the constraint volume information can be shared with airspace users on an as-needed basis without divulging sensitive aircraft information and can be an enabler for safe operation of UAVs when they remain outside of the reported volumes.

Although FIGURE 3 illustrates one example of a process 300 supporting anonymized indication and/or identification of exclusion zones for UAVs or other flight vehicles, various changes may be made to FIGURE 3. For example, air traffic data may come from a variety of sources, and FIGURE 3 does not limit this disclosure to any source of air traffic data.

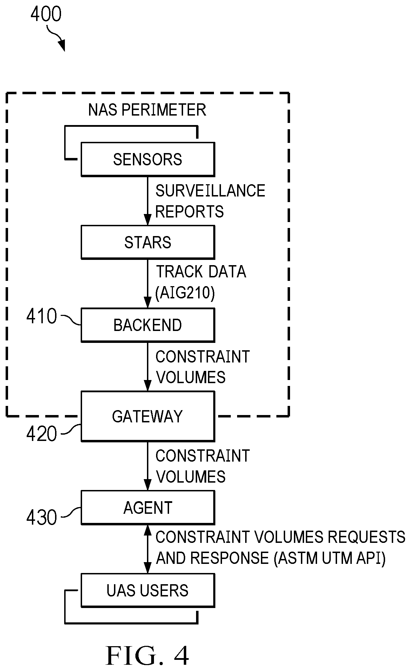

FIGURE 4 illustrates a block diagram for an example system 400 supporting anonymized indication and/or identification of exclusion zones for UAVs or other flight vehicles according to this disclosure. For example, the system 400 may implement the process 300 of FIGURE 3. As shown in FIGURE 4, the system 400 includes or is used in conjunction with a backend 410, a gateway 420, and an agent 430. The partitioning of the system 400 into a backend and an agent can provide separation between one or more external-facing interfaces and the NAS. This partitioning can provide security by physically separating sensitive NAS data from users of the system 400 and prevent a single point of failure from compromising the NAS.

In the example of FIGURE 4, the backend 410 has access to STARS track data (unfiltered, filtered and/or augmented) or other aircraft tracking data, where the backend 410 is external to the STARS system itself. For example, the backend 410 may be located within a terminal radar approach control (TRACON). The backend 410 has access to the gateway 420 in order to publish constraint volumes beyond the NAS perimeter. The gateway 420 is an Internet gateway, such as a NAS enterprise security gateway (NESG) that complies with FAA security requirements.

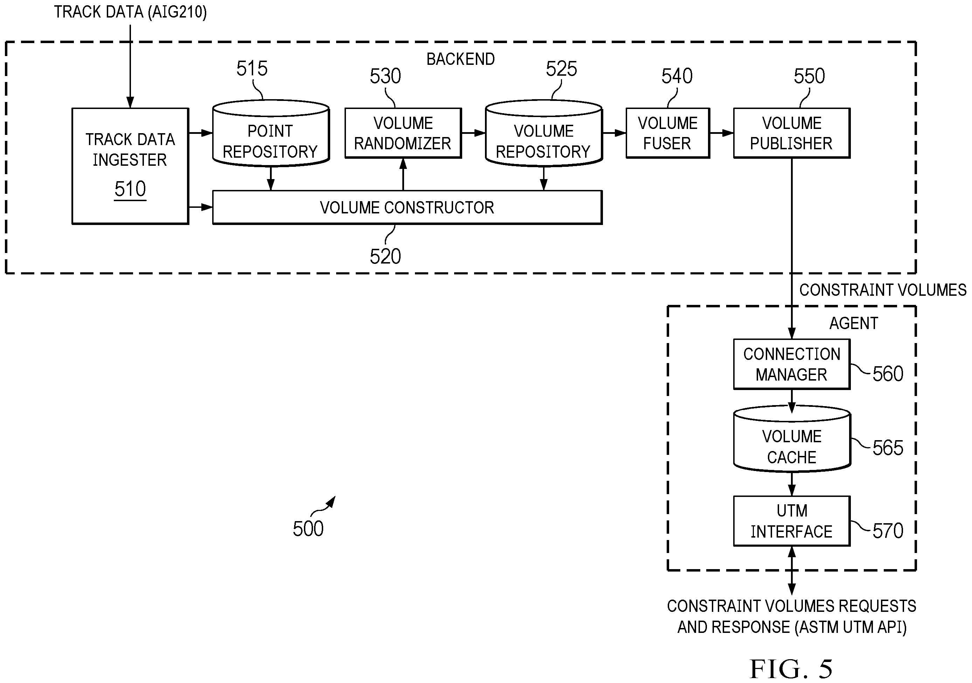

The agent 430, which is outside of the NAS perimeter, can implement an interface protocol and perform volume distribution to UAS users. In some cases, STARS multicasts track data in the proprietary AIG210 binary format, and this can be readily used by the backend 410 to ingest the air situation. The agent 430 connects to the backend 410 and/or similar backends at different locations. In some cases, to publish the constraint volumes, the agent 430 may leverage the existing ASTM UTM API, which allows a user to subscribe to volumes in a specified geographic area. In some embodiments, the backend 410 may run within a container on a STARS processor or elsewhere, whereas the agent 430 may be hosted in a public location. As shown by the example architecture in FIGURE 5, these components are comprised of a small suite of services. Note that the system 400 could be implemented using this architecture or another architecture to serve the same purpose.

Although FIGURE 4 illustrates one example of a block diagram for an example system 400 supporting anonymized indication and/or identification of exclusion zones for UAVs or other flight vehicles, various changes may be made to FIGURE 4. For example, air traffic data may come from a variety of sources, and FIGURE 4 does not limit this disclosure to any source of air traffic data. Beyond core capabilities, the system 400 may be enhanced in any number of ways, such as to provide multiple service level tiers. For example, more trusted users may be able to receive smaller and more precise constraint volumes or actual location information. An interface to STARS may be added to allow controllers to designate fixed constraint volumes, closing that airspace to UTM traffic regardless of the presence of traditional flights in that area.

FIGURE 5 illustrates a block diagram for a software architecture 500 supporting anonymized indication and/or identification of exclusion zones for UAVs or other flight vehicles according to this disclosure. For example, the system 400 of FIGURE 4 may employ the architecture 500 to implement the process 300 of FIGURE 3. As shown in FIGURE 5, the architecture 500 includes a track data ingester 510, a point repository 515, a volume constructor 520, a volume repository 525, a volume randomizer 530, a volume fuser 540, and a volume publisher 550, which in some cases may be implemented in a backend such as the backend 410 of FIGURE 4. The architecture 500 also includes a connection manager 560, a volume cache 565, and a UTM interface 570, which in some cases may be implemented in an agent such as the agent 430 of FIGURE 4.

The track data ingester 510 can receive track data, such as from STARS in the form of AIG210 messages, and store each track in the point repository 515. In some cases, only the track location, STARS track identifier (ID), and time of update may be stored, and no flight identifying information (such as ACID or beacon code) is stored. The STARS track ID can be used to determine when a track report already in the repository should be replaced by a new report, and the time of update can be used to purge stale data.

The volume constructor 520 can be triggered when the track data ingester 510 updates the point repository 515. If a point in the point repository 515 does not have a volume in the volume repository 525 or the point has moved such that the volume no longer prescribes a safe separation for it, the volume constructor 520 can create a volume for the point (such as a polygonal area and upper and lower bounds) defining a safe separation around the point and pass the volume to the volume randomizer 530. The volume randomizer 530 can expand a point's volume in order to obfuscate the point's location, such as by modifying or adding polygon vertices and modifying the upper and/or lower bounds, and storing the modified volume in the volume repository 525.

The volume fuser 540 can periodically evaluate the volumes in the volume repository 525 and merge those volumes determined to be close enough to do so. The entire set of merged and unmerged volumes are the constraint volumes to be published. The volume publisher 550 can be responsible for providing the constraint volumes, such as across a network gateway (like the gateway 420 of FIGURE 4) to a UTM API interface running in an agent, such as the agent 430 of FIGURE 4, or other destination.

The connection manager 560 can maintain the connection to one or more backends (such as the backend 410 of FIGURE 4) located as at one or more locations (such as TRACONs) and can maintain that connection status. The connection manager 560 can also receive the constraint volumes and hold them temporarily in the volume cache 565. The UTM API interface 570 can implement an API to provide constraint volumes from the volume cache 565 to subscribers in the UTM ecosystem. The UTM API can define constraint volumes and allow users to subscribe to constraints within a specified geographic area. In some cases, the UTM API interface 570 can manage subscriptions using the American Society for Testing and Materials (ASTM) UTM API. This API, which should be familiar to and used by any UTM service supplier (USS), defines constraint volumes as JavaScript object notation (JSON) objects and allows a user to subscribe to constraints within a specified geographic area.

Although FIGURE 5 illustrates one example of a block diagram for a software architecture 500 supporting anonymized indication and/or identification of exclusion zones for UAVs or other flight vehicles, various changes may be made to FIGURE 5. For example, air traffic data may come from a variety of sources, and FIGURE 5 does not limit this disclosure to any source of air traffic data. The interfaces of the architecture 500 can be readily expanded to interface with other surveillance systems instead of or in addition to STARS or to use other APIs beyond the ASTM UTM API.

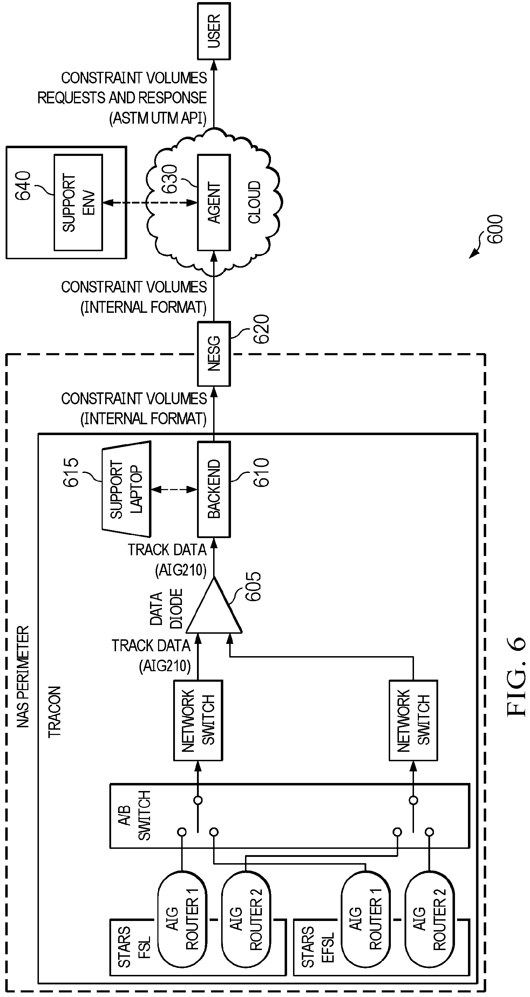

As previously described, a system supporting anonymized indication and/or identification of exclusion zones for UAVs or other flight vehicles (such as system 400 of FIGURE 4) may provide security by physically separating sensitive NAS data from users of the system by partitioning the system into a backend and an agent. In addition to partitioning, such a system may include various other security features, such as those now described with respect to FIGURE 6.

FIGURE 6 illustrates a block diagram for another example system 600 supporting anonymized indication and/or identification of exclusion zones for UAVs or other flight vehicles according to this disclosure. For example, the system 600 may implement the process 300 of FIGURE 3. As shown in FIGURE 6, the system 600 includes or is used in conjunction with a backend 610, a gateway 620, and an agent 630. The system 600 may be substantially similar to the system 400 of FIGURE 4, except that the system 600 includes additional security features. In this respect, the backends 610 may operate similarly to the backend 410, and the agent 630 may operate similarly to the agent 430. In some embodiments, data can flow one-way from the backend 610 to the agent 630 out of the NAS through the gateway 620. In this scenario, the gateway 620 can have the responsibility for restricting unauthorized access to the NAS.

Occasionally, it may be necessary or desirable for a technician to access the backend 610, such as for maintenance purposes (like to change configuration settings or to deploy new software). This can be accomplished by the technician connecting a support laptop 615 directly to the backend 610. Access control to the backend 610 can be achieved via physical security protocols, such as those already in place at the TRACON. For example, only technicians who have been cleared may have the ability to physically access the backend 610, and the support laptop 615 can have no other network access while connected to the backend 610. The support laptop 615 can be configured as applicable to the appropriate Center for Internet Security (CIS) benchmarks or Defense Information Systems Agency (DISA) security technical implementation guides (STIGs).

In some embodiments, a one-way data diode 605 provides a physical one-way (outgoing only) network from STARS to the backend 610. This may allow selected track data streams to flow from STARS to the backend 610 while defending the STARS deployment from downstream access. Also, in some embodiments, unfiltered STARS track data can be provided to the backend 610, such as via a direct Ethernet connection. Access to this track data can be protected, such as by using existing TRACON access protocols. A constraint volume released by the backend 610 may encompass the location of at least one track but can be expanded and randomized in a configurable manner so as to obfuscate the actual track position. The volume dimensions and location can be updated, such as when the track has moved so that it is no longer within a configured distance of the volume's perimeter. Further, in some embodiments, the constraint volumes produced by the system 600 may not contain any identifying information of the flights with which they are associated. All identifying information received in STARS track data by the backend 610 can be discarded. The agent 630 can filter the constraint volumes for a particular UAV operation to be bounded by the UAV's operational volume. Rather than seeing all volumes in the TRACON airspace, the UAV operator may be provided with just the volumes that may be interesting for that flight.

Unmanaged distribution of constraint volumes by the system 600 could permit bad actors to gain access to them and exploit the data for malicious purposes. This can be mitigated with interface protocols and with procedural measures. In some embodiments, the interface may use a subscription protocol with trusted users and can be limited to the particular UAV operation. Constraint volumes can be provided to a requesting user based on the operational volume. The subscription may expire after a configurable time period after the operation is scheduled to complete. Operation requests can be vetted for reasonableness (such as duration, volume bounds, excessive demand from one user, etc.), and those requests from unknown sources or which exceed expected bounds can be rejected. In some embodiments, users of the system 600 can be vetted before being granted access to data from the system 600. This may include verifying the existence of data safeguards, operator training, and validity of user operational use cases. In some embodiments, only trusted users may be granted access. In some embodiments, secure protocols between the backend 610 and the agent 630 and between the agent 630 and the user may ensure integrity across those interfaces. Also, in some embodiments, cloud security protocols can ensure access only by authorized users, such as product support 640.

Although FIGURE 6 illustrates one example of a block diagram for an example system 600 supporting anonymized indication and/or identification of exclusion zones for UAVs or other flight vehicles, various changes may be made to FIGURE 6. For example, air traffic data may come from a variety of sources, and FIGURE 6 does not limit this disclosure to any source of air traffic data. Furthermore, the system 600 may omit any of the security features described with respect to FIGURE 6 or include additional security features not shown or described.

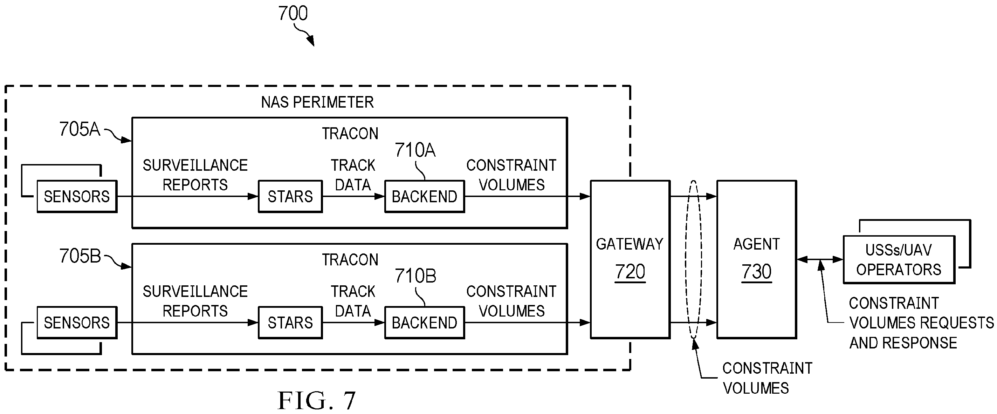

As previously described, an agent such as the agent 430 of FIGURE 4 may be in communication with multiple backends. An example including multiple backends is shown in FIGURE 7.

FIGURE 7 illustrates a block diagram for another example system 700 supporting anonymized indication and/or identification of exclusion zones for UAVs or other flight vehicles according to this disclosure. For example, the system 700 of FIGURE 7 may implement the process 300 of FIGURE 3. As shown in FIGURE 7, the system 700 includes or is used in conjunction with a backend 710A located at a TRACON 705A and an additional backend 710B located at a TRACON 705B, a gateway 720, and an agent 730. Except for the inclusion of multiple backends, the system 700 may be substantially similar in functionality and operation to the system 400 of FIGURE 4. In this respect, the backends 710A and 710B may operate similarly to the backend 410, and the agent 730 may operate similarly to the agent 430. However, the agent 730 may receive constraint volumes from both of the backends 610A and 610B via the gateway 620.

Although FIGURE 7 illustrates one example of a block diagram for an example system 700 supporting anonymized indication and/or identification of exclusion zones for UAVs or other flight vehicles, various changes may be made to FIGURE 7. For example, air traffic data may come from a variety of sources, and FIGURE 7 does not limit this disclosure to any source of air traffic data. Furthermore, the agent 730 may receive constraint volumes from any number of backends in addition to the backends 710A and 710B.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive (HDD), a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. The scope of the invention is as set out in the appended claims.

## Claims

1. A method comprising:
obtaining data associated with a specified airspace indicating or identifying manned flights within the specified airspace;
identifying one or more exclusion zones associated with one or more of the manned flights within the specified airspace based on the data, each exclusion zone identifying a volume from which one or more flight vehicles (116a-116d) are excluded from operating within the specified airspace;
modifying each of the one or more exclusion zones in order to randomly change a shape of each of the one or more exclusion zones and generate one or more modified exclusion zones; and
providing information defining the one or more modified exclusion zones to one or more flight vehicle operators (114a-114d) so that the one or more flight vehicle operators are able to avoid operating the one or more flight vehicles in the one or more modified exclusion zones,
wherein the information defining the one or more modified exclusion zones lacks information identifying the one or more manned flights within the one or more exclusion zones.

2. The method of Claim 1, wherein each of the one or more modified exclusion zones is modified so as to hide an actual location and an actual flight path of the one or more associated manned flights.

3. The method of Claim 1, wherein the data includes at least one of:
an aircraft identifier;
an aircraft location within the specified airspace;
an aircraft ground speed; and
an aircraft type.

4. The method of Claim 1, wherein each of the one or more modified exclusion zones is generated by (i) randomly modifying a shape of the associated exclusion zone and (ii) randomly modifying upper and lower bounds of the associated exclusion zone.

5. The method of Claim 1, wherein each of the one or more flight vehicle operators subscribes to receive at least one modified exclusion zone.

6. The method of Claim 5, wherein each subscription lasts only for an expected time period of an associated flight by a flight vehicle in the specified airspace.

7. The method of Claim 1, wherein the data associated with the specified airspace is obtained through a one-way data diode (605).

8. An apparatus comprising:
a communications unit (206) configured to obtain data associated with a specified airspace indicating or identifying manned flights within the specified airspace; and
at least one processing device (202) operatively coupled to the communications unit, the at least one processing device configured to:
identify one or more exclusion zones associated with one or more of the manned flights within the specified airspace based on the data, each exclusion zone identifying a volume from which one or more flight vehicles (116a-116d) are excluded from operating within the specified airspace; and
modify each of the one or more exclusion zones in order to randomly change a shape of each of the one or more exclusion zones and generate one or more modified exclusion zones;
wherein the communications unit is further configured to provide information defining the one or more modified exclusion zones to one or more flight vehicle operators (114a-114d) so that the one or more flight vehicle operators are able to avoid operating the one or more flight vehicles in the one or more modified exclusion zones, and
wherein the information defining the one or more modified exclusion zones lacks information identifying the one or more manned flights within the one or more exclusion zones.

9. The apparatus of Claim 8, wherein the at least one processing device is configured to modify each of the one or more modified exclusion zones so as to hide an actual location and an actual flight path of the one or more associated manned flights; or
wherein the data includes at least one of:
an aircraft identifier;
an aircraft location within the specified airspace;
an aircraft ground speed; and
an aircraft type.

10. The apparatus of Claim 8, wherein, to modify each of the one or more exclusion zones, the at least one processing device is configured to (i) randomly modify a shape of the associated exclusion zone and (ii) randomly modify upper and lower bounds of the associated exclusion zone.

11. The apparatus of Claim 8, wherein the at least one processing device is configured to allow each of the one or more flight vehicle operators to subscribe to receive at least one modified exclusion zone; and, optionally,
wherein each subscription lasts only for an expected time period of an associated flight by a flight vehicle in the specified airspace.

12. The apparatus of Claim 8, wherein the communications unit is configured to obtain the data associated with the specified airspace through a one-way data diode (605).

13. A non-transitory machine readable medium containing instructions that when executed cause at least one processor to:
obtain data associated with a specified airspace indicating or identifying manned flights within the specified airspace;
identify one or more exclusion zones associated with the one or more of the manned flights within the specified airspace based on the data, each exclusion zone identifying a volume from which one or more flight vehicles (116a-116d) are excluded from operating within the specified airspace;
modify each of the one or more exclusion zones in order to randomly change a shape of each of the one or more exclusion zones and generate one or more modified exclusion zones; and
provide information defining the one or more modified exclusion zones to one or more flight vehicle operators (114a-114d) so that the one or more flight vehicle operators are able to avoid operating the one or more flight vehicles in the one or more modified exclusion zones,
wherein the information defining the one or more modified exclusion zones lacks information identifying the one or more manned flights within the one or more exclusion zones.

14. The non-transitory machine readable medium of Claim 15, wherein the instructions that when executed cause the at least one processor to modify each of the one or more exclusion zones comprise instructions that when executed cause the at least one processor to hide an actual location and an actual flight path of the one or more associated manned flights; or
wherein the data includes at least one of:
an aircraft identifier;
an aircraft location within the specified airspace;
an aircraft ground speed; and
an aircraft type;
or
wherein the instructions that when executed cause the at least one processor to modify each of the one or more exclusion zones comprise instructions that when executed cause the at least one processor to (i) randomly modify a shape of the associated exclusion zone and (ii) randomly modify upper and lower bounds of the associated exclusion zone.

15. The non-transitory machine readable medium of Claim 15, further containing instructions that when executed cause the at least one processor to allow each of the one or more flight vehicle operators to subscribe to receive at least one modified exclusion zone; and, optionally,
wherein each subscription lasts only for an expected time period of an associated flight by a flight vehicle in the specified airspace.
